# EUROPEAN PATENT APPLICATION

(11) **EP 1 447 804 A1**
(43) Date of publication of application: **18.08.2004**
(21) Application number: 03290371.8
(22) Date of filing: 17.02.2003
(51) Int. Cl.: G11B 19/02, G11B 27/36, G04G 15/00

(54) **Timer, notably for a video recorder and process for programming a timer**

(71) Applicant: Thomson Licensing S.A., 92100 Boulogne-Billancourt (FR)
(72) Inventor: Yuan, Lifen, 760874 Singapore (SG); Chng, Jack Ping, 11700 Penang (MY)
(74) Representative: Bonnans, Arnaud

(57) **Abstract**

A timer, for instance in a video recorder is programmed according to the following process : the user enters the month and day of the start date ; the user enters the start time and the end time ; the complete start date is computed based on the entered month, day, start time and/or end time and on an internal clock.

## Description

The invention relates to a timer, notably for a video recorder, and to a process for programming a timer.

Timers are used in electronic devices to schedule the triggering of an event. For instance, in video recorders, a timer is used to start and stop a recording according to a schedule entered by a user.

To ease entry of the data by the user when programming the timer, it has already been proposed to input only the day of the month and month to specify the starting date. The timer uses the current year to complete the starting date data and can possibly compute and display the corresponding day of the week that the user may check.

Once the starting date is so defined, the user can enter the start and end times, for instance by jumping to the following line of a user interface.

The timer is thus programmed to start the event (for instance recording) on the defined starting date at the entered start time and to stop the event when the stop time occurs.

This programming procedure is particularly simple to implement. However, the inventors have realised that the resulting schedule does not correspond to the user's most possible wishes in some cases, notably because of the default use of the current year.

Consequently, it is proposed a timer of an electronic device comprising date input means for receiving an input date, time input means for receiving a start time and an end time and means for computing a start date based on the input date and on the start time and/or the end time.

By taking into account the start time and/or the end time, the start date can be evaluated more precisely from the input date.

The timer may also comprise means for generating signals to be displayed representative of the start date.

A video recorder with a timer is accordingly proposed comprising date input means for receiving an input date, time input means for receiving a start time and an end time and means for computing a start date based on the input date and on the start time and/or the end time.

The video recorder may also comprise means for generating signals to be displayed representative of the start date.

The means for computing a start date uses data from an internal clock.

Preferably, the means for computing computes the start date based on the input date, the start time and the end time.

A process for programming a timer is proposed with the steps of :
- receiving month data and day data ;
- computing a first date based on the day data, the month data ;
- generating a first signal representative of the first date ;
- receiving start time data and end time data ;
- computing a second date based on the month data and the day data, and on the start time data and/or the end time data (preferably on the start time data and the end time data) ;
- generating a second signal representative of the second date.

More generally, it is proposed a process for programming a timer with the steps of :
- receiving month data and day data ;
- receiving start time data and end time data ;
- computing a start date based on the month data and the day data, and on the start time data and/or the end time data (preferably on the start time data and the end time data).

Preferably, the process also includes the step of generating a signal representative of the start date.

It is also proposed a process for programming a timer with the steps of :
- receiving month data and day data ;
- receiving start time data and end time data ;
- computing a start date based on the month data and the day data, on the start time data and/or the end time data and on data from an internal clock.

Preferably, the start time data and the end time data are used.

A possible embodiment of the invention will now be described with reference to :
- Figure 1 representing the main elements of a video recorder ;
- Figures 2 to 5 illustrating a possible embodiment of a user interface for timer programming.

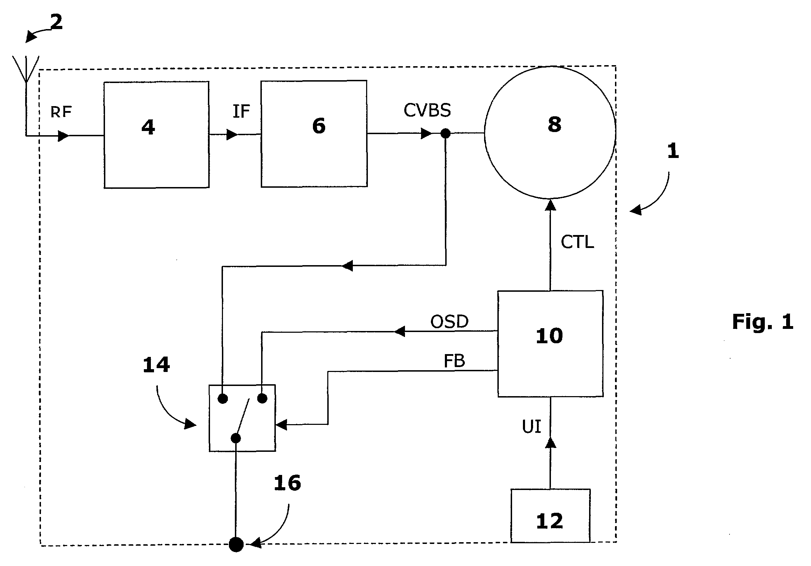

A video recorder 1 having a timer capability is schematically represented on Figure 1.

The video recorder 1 receives an RF video signal from an antenna 2. The RF video signal is down-converted into an IF video signal by a tuner 4 and demodulated into a base band video signal CVBS by a demodulator 6.

The base band video signal CVBS is input to a recording unit 8 which has the ability to record the video sequence represented by the video signal CVBS on a medium. The recording unit 8 may for instance include a video decoder with an analogue-to-digital converter to generate a digital stream from the base band video signal CVBS, a MPEG encoder to generate a MPEG stream based on the digital stream and a medium interface to record the MPEG stream on a medium, such as a hard disc or an optical disc (e.g. DVD recordable).

The base band video signal CVBS is also transmitted to a connector 16 of the video recorder 1 through a mixer 14. Connector 16 is to be connected to a display device, such as a television receiver, which displays a video sequence corresponding to the signal carried by connector 16, for instance the base band video signal CVBS received on antenna 2.

The video recorder 1 has a controller unit 10 including for instance a microprocessor and necessary memory. Any other type of controller unit could be used, such as a micro-controller.

The controller unit 10 includes an OSD processor function : it may output a video signal OSD to be superimposed to the base band video signal CVBS thanks to the mixer 14, according to a fast-blanking signal FB. Video signal OSD is used by the controller unit 10 to output video sequences representing a user interface on connector 16 in order to display the user interface on the display device.

The controller unit 10 receives user input data UI representing data entered by the user through a user input device 12. The user input device 12 may be an IR receiver ; the user then input data on a remote-control of the video recorder. Alternatively, the user input device 12 may be a keyboard attached to or remote from the video recorder.

The controller unit 10 has a timer function. Through a convenient menu of the user interface on the display device, the user can enter via the user input device 12 the scheduled start time and end time of a recording, according to a method described in greater detail below. Referring to its internal clock, the controller unit 10 triggers the recording as scheduled by sending appropriate control signals CTL to the recording unit 8.

To program the timer, the user is first prompted to enter the date on which the recording should start in the format DD/MM where DD is the day in the month (between 1 and 31) and MM represents the month (between 1 and 12).

At this stage, the year is supposed to be the current year, i.e. the year given by the internal clock at the time of programming the timer is used as the default year.

Using this assumption, the controller unit 10 determines the day of the week corresponding to the entered date DD/MM in the current year (default year) which is thus the first date to be considered. The controller unit 10 accordingly sends out OSD signals showing this day of the week. By displaying the day of the week, together with the entered DD/MM, a straightforward representation of the first date is given to the user. In many cases, the first date corresponds to the wish of the user, which he can easily confirm by seeing that the day of the week is as desired.

The user is then successively prompted to enter the start time and the end time, each in the format HH:MM, where HH gives the hour (between 0 and 23) and MM the minute (between 0 and 59).

In view of these new data, the controller unit 10 will check that the first considered date is still meaningful. More precisely, the controller unit 10 will compute the date (second date) which is the most likely to correspond to the user's wish given the day of month (DD), month (MM), start time and stop time.

In many cases, this second date is equal to the first date. However, under certain circumstances further detailed below, the assumption that the timer year is the current year is wrong. In these cases, the timer year is evaluated and the second date differs from the first date.

In any case, the controller unit 10 generates OSD signals which display the day of the week of the second date as an indication of the second date so that the user may check he has correctly input the timer data.

The logics which are described now can be used to determine which year should be used as the year of the starting date (second date). First, it should be pointed out that the maximum programmable length for a recording is 24 hours in such a system where only the starting date is input. Further, the end of the event (recording) may take place the same day as the start of recording or the day after, depending on the end time.

To simplify the description, CD will be used for the current day of the year (for instance August 15) and CY for the current year. The input date of the year will be ID (thus ID = DD/MM).

CT is the current time of the day (hour and minute information). Similarly, ST is the start time input by the user and ET is the end time input by the user.

The logics are based on two principles :
- a recording cannot be programmed for the past, *i.e.* cannot end at a past moment ;
- programs having a start moment earlier than present but a stop moment later than present are allowed : recording is triggered immediately and ends at the input stop moment.

The year Y which is most likely to correspond to the user's request is thus determined by the following :
- if ID < (CD-1), Y = CY+1 ;
- if ID = CD-1 :
   * if ET > ST, Y = CY+1 (end time on day CD-1) ;
   * if ET ≤ ST, (end time on day CD) :
- if ET ≤ CT, Y = CY+1 ;
- if ET > CT, Y = CY (start recording immediately) ;
- if ID = CD :
   * if (ST < ET AND ET ≤ CT), Y = CY+1 ;
   * if (ET ≤ ST OR ET > CT), Y = CY
- if ID > CD, Y = CY.

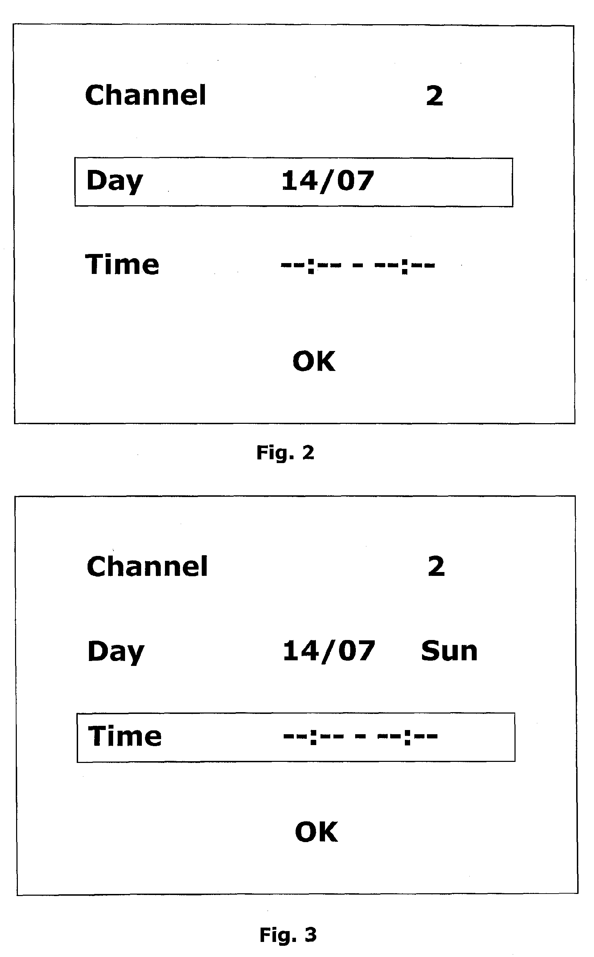

An example of timer programming will now be given with reference to figures 2 to 5, assuming the current date is July 14, 2002 (CD = 14/07 ; CY = 2002) and the current time is 2:15 pm (CT = 14:15).

Once the user has entered the channel to be recorded, the control unit 10 waits for the user to input the recording date (start date). As shown on Figure 2, the input date ID (ID = 14/07) is entered by the user and received by the controller unit 10.

By pressing a selection key ("OK" for instance) or changing line (by a down arrow key on its remote control), the user indicates he has entered the starting date as desired. In an alternative embodiment, the controller unit 10 can consider the user's choice is effective as soon as the four digits of the starting date are entered.

The controller unit 10 then computes the year which is most likely to correspond to the user's request, based only upon the input date ID. For instance, the current year is used. In an alternative embodiment, the following logics could be used :
- if ID ≥ CD, Y = CY ;
- if ID < CD, Y = CY+1.

In the present example, the first year to be considered is 2002. Using this assumption, the controller unit 10 determines the day of the week corresponding to the input date on this first assumed year *(i.e.* week of the day of the first date) ; here, the controller unit 10 finds that July 14, 2002 is a Sunday. The assumed first date, expressed as day of the month, month and day of the week, is accordingly displayed by the controller unit 10 through the OSD signals it generates on connector 16, as shown on Figure 3.

Figure 3 also represents the controller unit 10 prompting the user to input the start and end times by highlighting the corresponding line.

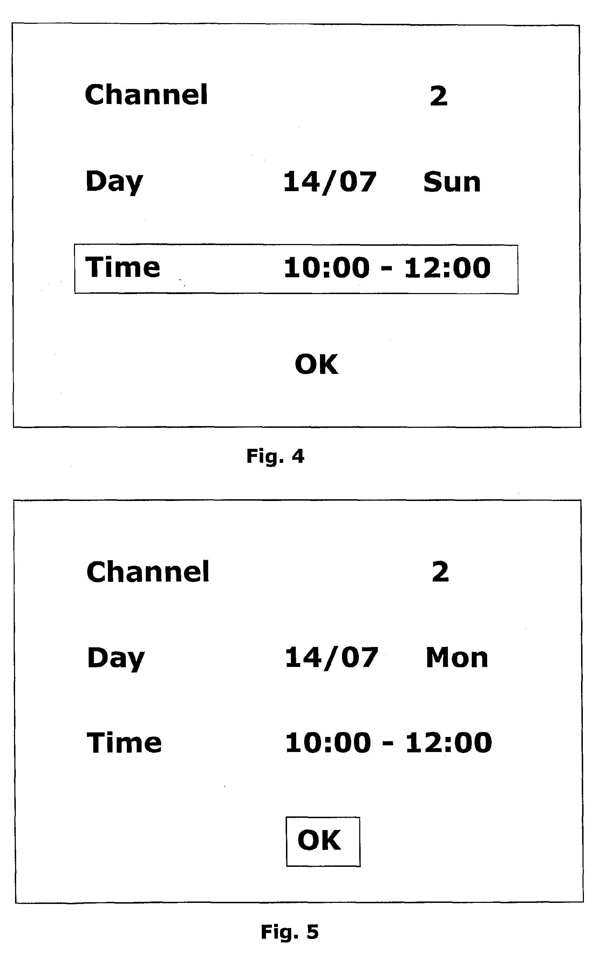

As shown on Figure 4, the user enters the start time and end time, which are received as start time data ST and end time data ET by the controller unit 10. Here, ST = 10:00 and ET = 12:00.

Based upon the previously entered input date ID, and the now entered start time ST and end time ET, the controller unit 10 will compute again the recording date and thus generate a second date. The computation can be made according to the logics described above.

Here, as ID = CD and ST < ET < CT, the above logics results in Y = CY+1 = 2003. The controller unit 10 thus compute a new day of the week corresponding to July 14, 2003 (which is Monday) and generates OSD signals in accordance, as shown on Figure 5.

By computing again the day of recording when the time information is entered, the controller unit 10 has an improved timer function which is safer and fits better the user's wish. In the above example, it would have been useless to have a program from 10:00 to 12:00 on July 14, 2002 as these moments would never have occurred any more. By computing again the day of recording once the start and end times are entered, an effective program is stored in memory for July 14, 2003.

The user can check the data he has entered and the day of the week (giving an easy representation of the second date) at which the recording shall start, and press OK to confirm the programming.

Of course, the invention is not limited to the above example. For instance, the complete date may be represented by day of month, month and year instead of day of month, month, day of week. Similarly, the day of month and month can be represented and/or entered in opposite order. The month can be written as a word (instead of a figure).

## Claims

1. Timer of an electronic device comprising :
- date input means for receiving an input date ;
- time input means for receiving a start time and an end time ;
- means for computing a start date based on the input date and on the start time and/or the end time.

2. Timer of an electronic device according to claim 1, wherein the means for computing a start date uses data from an internal clock.

3. Timer of an electronic device according to claim 1 or 2, further comprising :
- means for generating signals to be displayed representative of the start date.

4. Video recorder with a timer comprising :
- date input means for receiving an input date ;
- time input means for receiving a start time and an end time ;
- means for computing a start date based on the input date and on the start time and/or the end time.

5. Video recorder according to claim 4, wherein the means for computing a start date uses data from an internal clock.

6. Video recorder according to claim 4 or 5, further comprising :
- means for generating signals to be displayed representative of the start date.

7. Process for programming a timer with the steps of :
- receiving month data and day data ;
- computing a first date based on the day data, the month data ;
- generating a first signal representative of the first date ;
- receiving start time data and end time data ;
- computing a second date based on the month data and the day data and on the start time data and/or the end time data ;
- generating a second signal representative of the second date.

8. Process for programming a timer with the steps of :
- receiving month data and day data ;
- receiving start time data and end time data ;
- computing a start date based on the month data and the day data and on the start time data and/or the end time data.

9. Process for programming a timer according to claim 8, with the further step of :
- generating a signal representative of the start date.

10. Process for programming a timer with the steps of :
- receiving month data and day data ;
- receiving start time data and end time data ;
- computing a start date based on the month data and the day data, on the start time data and/or the end time data, and on data from an internal clock.
